# DEMANDE DE BREVET EUROPEEN

(11) **EP 0 921 651 A1**
(43) Date de publication de la demande: **09.06.1999**
(21) Numéro de dépôt: 98403060.1
(22) Date de dépôt: 07.12.1998
(51) Int. Cl.: H04J 3/16, H04Q 11/04, H04J 3/14

(54) **Système de transmission par voie hertzienne à capacité de transmission configurable, émetteur et récepteur correspondants**

(30) Priorité: 08.12.1997 FR 9715462
(71) Demandeur: ALCATEL, 75008 Paris (FR)
(72) Inventeur: Roux, Pierre, 95100 Argenteuil (FR); Peruyero, Michel, 92000 Nanterre (FR)
(74) Mandataire: Smith, Bradford Lee

(57) **Abrégé**

L'invention concerne un système de transmission par voie hertzienne, du type comprenant un émetteur (1) pouvant transmettre à un récepteur (2) des données numériques organisées en trames standardisées, chaque trame standardisée (3) correspondant à un multiplex de débits selon une hiérarchie numérique synchrone et comprenant notamment des conteneurs et des données structurelles communes.

Selon l'invention, l'émetteur (1) comprend des moyens (10, 11) de construction de trames non standardisées (4) à partir des trames standardisées (3), par retrait de certain(s) conteneur(s) de chaque trame standardisée. L'émetteur (1) transmet au récepteur (2) les trames non standardisées à la place des trames standardisées. En outre, le récepteur (2) comprend des moyens (20, 21, 22) de reconstruction des trames standardisées (6) à partir des trames non standardisées (5) qu'il reçoit.

## Description

Le domaine de l'invention est celui des réseaux de transmission de données numériques à hauts débits (c'est-à-dire au-delà de 2 Mbit/s selon la norme européenne ou 1,5 Mbit/s selon la norme américaine).

Aujourd'hui, la plupart des liaisons mises en oeuvre dans de tels réseaux sont supportées par de la fibre optique (qui remplace la paire de cuivre utilisée auparavant). Cependant, il existe aussi des liaisons par voie hertzienne, et c'est précisément à ce dernier type de liaison que l'on s'intéresse ici.

En effet, l'invention concerne un système de transmission par voie hertzienne, du type comprenant un émetteur pouvant transmettre à un récepteur des données numériques organisées en trames standardisées.

Classiquement, dans un réseau de transmission de données, des fonctions de multiplexage sont utilisées afin de former des débits supérieurs par regroupement de débits inférieurs, les débits supérieurs étant plus faciles à transporter et à gérer.

On distingue principalement deux types de multiplexage haut débit, à savoir le multiplexage plésiochrone et le multiplexage synchrone. Dans le cadre de la présente invention, on s'intéresse uniquement au multiplexage synchrone.

Depuis 1988, le multiplexage synchrone repose sur deux nouvelles hiérarchies synchrones.

L'une, dite SDN (pour "Synchronous Digital Hierarchy" en anglais), est mise en oeuvre principalement en Europe. Elle est définie à travers des recommandations de l'Union Internationale des Télécommunications (recommandations UIT-T G.707, G.708, G.709 et G70X notamment).

L'autre, dite SONET (pour "Synchronous Optical NETwork" en anglais), est mise en oeuvre principalement en Amérique du Nord.

Ces deux nouvelles hiérarchies numériques synchrones sont basées sur des principes semblables et se distinguent essentiellement en ce que la première (SDH) propose une trame de base STM-1 à 155,52 Mbit/s alors que la seconde (SONET) propose une trame de base STS-1 à 51,84 Mbit/s (soit sensiblement un tiers du débit de STM-1).

Elles ont été conçues pour des réseaux de transmission utilisant la fibre optique comme support de transmission. Ceci explique pourquoi l'une comme l'autre présentent un débit de base (qui est-le débit associé à une trame de base) très élevé, à savoir 155,52 Mbit/s et 51,84 Mbit/s respectivement. En effet, le coût de la libre optique peut être considéré comme sensiblement indépendant du débit supporté, et par conséquent, il n'est pas gênant que les supports de transmission optiques soient surdimensionnés.

En revanche, les nouvelles hiérarchies numériques synchrones ne conviennent pas aux liaisons par voie hertzienne. En effet, il est fréquent, surtout pour les liaisons hertziennes, que la trame de base (STM-1 ou STS-1) soit surdimensionnée par rapport au besoin. Souvent, le besoin réel de transmission est limité à quelques conteneurs de 2 ou 1,5 Mbit/s chacun. Or, un surdimensionnement est très gênant pour les supports de transmission hertziens, puisque la bande radio est rare et chère.

Plusieurs solutions ont été proposées pour pouvoir néanmoins utiliser les nouvelles hiérarchies numériques synchrones pour les transmissions de données par voie hertzienne.

Une première solution connue repose sur l'amélioration de l'efficacité spectrale des modulations utilisées, de façon à autoriser la transmission du signal (correspondant aux trames de base) dans des bandes relativement étroites. Malheureusement, cette amélioration de l'efficacité spectrale entraîne une augmentation importante du coût, notamment du fait que le matériel est plus complexe, les puissances émises sont plus fortes, les consommations sont supérieures, etc.

Une seconde solution connue, propre à la nouvelle hiérarchie numérique synchrone européenne SDH, repose sur la définition (selon la recommandation UIT-T G.708 Annexe A) d'une nouvelle trame de base STM-0, au tiers du débit de la trame de base STM-1 (soit environ 51 Mbit/s). Ceci permet de limiter, lorsque la capacité de la nouvelle trame de base STM-0 est suffisante, les besoins en bande radio, tout en maintenant l'intégralité des services liés à la nouvelle hiérarchie SDH. Cependant, la nouvelle trame de base STM-0 apparaît encore surdimensionnée dans de nombreux cas, où le besoin ne concerne par exemple que deux ou trois conteneurs (soit un débit de 2x2 Mbit/s ou 3x2 Mbit/s).

En fait, l'utilisation la plus judicieuse de la bande radio demanderait la normalisation d'un grand nombre de nouvelles trames de base, correspondant chacune à un nombre entier distinct de conteneurs, c'est-à-dire avec des débits de 2 Mbit/s, 2x2 Mbit/s, 3x2 Mbit/s, etc. Mais ceci ne peut être mis en oeuvre en pratique, car il n'est pas souhaitable de multiplier les interfaces de réseau SDH, de façon à ne pas rendre trop complexe l'interconnexion des réseaux.

L'invention a notamment pour objectif de pallier ces différents inconvénients de l'état de la technique.

Plus précisément, l'un des objectifs de la présente invention est de fournir un système de transmission de données par liaison hertzienne entre un émetteur et un récepteur, permettant de conserver l'intégralité des services offerts par la nouvelle hiérarchie numérique synchrone utilisée (SDH ou SONET), tout en permettant d'optimiser la bande radio nécessaire à la transmission.

L'invention a également pour objectif de fournir un tel système permettant de maintenir le caractère synchrone de la transmission.

Un autre objectif de l'invention est de fournir un tel système qui soit simple à mettre en oeuvre, tant dans l'émetteur que dans le récepteur, et peu coûteux.

Ces différents objectifs, ainsi que d'autres qui apparaîtront par la suite, sont atteints selon l'invention à l'aide d'un système de transmission par voie hertzienne, du type comprenant un émetteur pouvant transmettre à un récepteur des données numériques organisées en trames standardisées, chaque trame standardisée correspondant à un multiplex de débits selon une hiérarchie numérique synchrone et comprenant notamment des conteneurs et des données structurelles communes,
caractérisé en ce que ledit émetteur comprend des moyens de construction de trames non standardisées à partir desdites trames standardisées, par retrait de certain(s) conteneur(s) de chaque trame standardisée, ledit émetteur transmettant audit récepteur lesdites trames non standardisées à la place desdites trames standardisées,
et en ce que ledit récepteur comprend des moyens de reconstruction desdites trames standardisées à partir des trames non standardisées qu'il reçoit.

Le principe général de l'invention consiste donc à ne transmettre qu'une partie des conteneurs, tout en transmettant toutes les données structurelles communes (à savoir notamment des surdébits communs, de conduit POH et de section SOH, et des pointeurs).

En d'autres termes, on garde des trames standardisées (c'est-à-dire un débit normalisé selon l'une des nouvelles hiérarchies SDH ou SONET) en amont de l'émetteur et en aval du récepteur. Par contre, entre l'émetteur et le récepteur, on utilise des trames non standardisées, ne transmettant que la charge réellement utile (pas de surdimensionnement.

De cette façon, on maintient des interfaces normalisées (SDH ou SONET) aux extrémités de la liaison hertzienne (c'est-à-dire dans l'émetteur et dans le récepteur). En revanche, seule la charge réellement utile étant transmise, on optimise la bande radio nécessaire à la transmission, et en conséquence on réduit le coût de cette transmission. On rappelle que contrairement à la libre optique, la bande radio constitue une ressource coûteuse (puisque limitée), dont il convient d'optimiser l'utilisation.

De façon avantageuse, chaque conteneur retiré est un conteneur vide ou non indispensable.

Avantageusement, lesdits moyens de construction assurent également le retrait de données structurelles propres à chaque conteneur retiré.

Par données structurelles propres à chaque conteneur retiré, on entend notamment des surdébits de conduit POH et des pointeurs propres à chaque conteneur retiré. Par exemple, si un conteneur C-12 est retiré, les surdébits ajoutés à ce conteneur C-12 pour former un conteneur virtuel VC-12 sont également retirés, ainsi que les pointeurs de VC-12 permettant de former des unités d'affluents TU-12.

Préférentiellement, lesdits moyens de reconstruction comprennent des moyens d'ajout, dans chaque trame non standardisée reçue, de conteneur(s) de remplissage.

Ainsi, par ajout de conteneurs de remplissage, on revient en aval du récepteur à un débit normalisé selon l'une des nouvelles hiérarchies SDH ou SONET.

De façon avantageuse, chaque conteneur de remplissage contient une indication de sa vacuité et/ou au moins une séquence de données appartenant au groupe comprenant les séquences aléatoires et les séquences de brouillage.

De façon préférentielle, le nombre de conteneur(s) de remplissage ajouté(s) dans chaque trame non standardisée reçue est égal au nombre de conteneur(s) retiré(s) de la trame standardisée correspondante par lesdits moyens de construction.

Avantageusement, lesdites trames standardisées appartiennent au groupe comprenant les trames STM-N, avec N ≥ 0, et les trames STS-M, avec M ≥ 1.

On rappelle que les trames de base STM-1 et STM-0 correspondent à la norme européenne et la trame de base STS-1 correspond à la norme nord-américaine.

De façon avantageuse, le débit des trames standardisées est un facteur rationnel du débit des trames non standardisées.

Ainsi, on maintient le caractère synchrone de la transmission.

Dans un premier mode de réalisation préférentiel de l'invention, ledit émetteur comprend des moyens de calcul, pour chaque trame non standardisée à émettre, de données de contrôle de parité avant émission, destinées à être insérées dans ladite trame non standardisée à émettre, ledit calcul étant fonction d'une part de ladite trame non standardisée à émettre et d'autre part du ou des conteneur(s) de remplissage ajouté(s) par le récepteur à la trame non standardisée reçue afin d'obtenir la trame standardisée reconstruite correspondante,
et ledit récepteur comprend des moyens de calcul, pour chaque trame standardisée reconstruite, de données de contrôle de parité après émission, ledit calcul étant fonction de ladite trame standardisée reconstruite, et des moyens de comparaison desdites données de contrôle de parité avant et après émission, de façon à apprécier la qualité de transmission entre ledit émetteur et ledit récepteur.

Ainsi, dans ce premier mode de réalisation, tous les contrôles de parités au niveau de l'émetteur sont recalculés. Par conséquent, l'émetteur se comporte comme une "station de multiplexage", c'est-à-dire un équipement dans lequel la décomposition/recomposition des trames standardisées est "officielle".

Avantageusement, dans le cas de ce premier mode de réalisation, ledit émetteur comprend, en amont desdits moyens de construction de trames non standardisées, des moyens de surveillance et de report de la qualité des trames standardisées.

En effet, il convient de conserver une trace des éventuelles erreurs dont sont entachées les trames standardisées, avant que celles-ci soient masquées par le recalcul, au niveau de l'émetteur, de tous les contrôles de parités.

Dans un second mode de réalisation préférentiel de l'invention, chaque trame standardisée comprenant des données de contrôle de parité qui lui sont propres, ledit émetteur comprend des moyens de correction desdites données de contrôle de parité propres à chaque trame standardisée, de façon à obtenir des données de contrôle de parité avant émission destinées à être insérées dans la trame non standardisée à émettre correspondante, ladite correction étant fonction de la différence entre le ou les conteneur(s) retiré(s) de chaque trame standardisée et le ou les conteneur(s) de remplissage ajouté(s) par le récepteur à la trame non standardisée reçue afin d'obtenir la trame standardisée reconstruite correspondante,
et ledit récepteur comprend des moyens de calcul, pour chaque trame standardisée reconstruite, de données de contrôle de parité après émission et des moyens de comparaison desdites données de contrôle de parité avant et après émission, de façon à apprécier la qualité de transmission en amont dudit récepteur.

Ainsi, dans ce second mode de réalisation, les contrôles de parités au niveau de l'émetteur sont simplement corrigés (et non pas recalculés comme dans le premier mode de réalisation). Par conséquent, l'émetteur ne masque pas les éventuelles erreurs dont sont affectées les trames standardisées fournies à l'émetteur, et peut donc se dispenser de surveiller et de reporter la qualité de ces dernières. On notera que l'émetteur a ici un statut "pseudo-transparent". Il ne peut pas prétendre au statut de transparence puisqu'il ne transmet pas toutes les composantes.

Dans ces premier et second modes de réalisation préférentiels de l'invention, on suppose connu de l'émetteur le ou les conteneur(s) de remplissage ajouté(s) par le récepteur.

L'invention concerne également un émetteur compris dans un système tel que précité, cet émetteur comprenant des moyens de construction de trames non standardisées à partir des trames standardisées, par retrait de certain(s) conteneur(s) de chaque trame standardisée, ledit émetteur transmettant audit récepteur lesdites trames non standardisées à la place desdites trames standardisées.

L'invention concerne également un récepteur compris dans un système tel que précité, ce récepteur comprenant des moyens de reconstruction des trames standardisées à partir des trames non standardisées qu'il reçoit.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 rappelle la structure de multiplexage de l'UIT-T pour la nouvelle hiérarchie numérique synchrone SDH;
- la figure 2 présente un schéma synoptique d'un mode de réalisation particulier d'un système de transmission par voie hertzienne selon l'invention;
- la figure 3 un schéma simplifié de l'émetteur dans une première variante du système de la figure 2 ; et
- la figure 4 un schéma simplifié de l'émetteur dans une seconde variante du système de la figure 2.

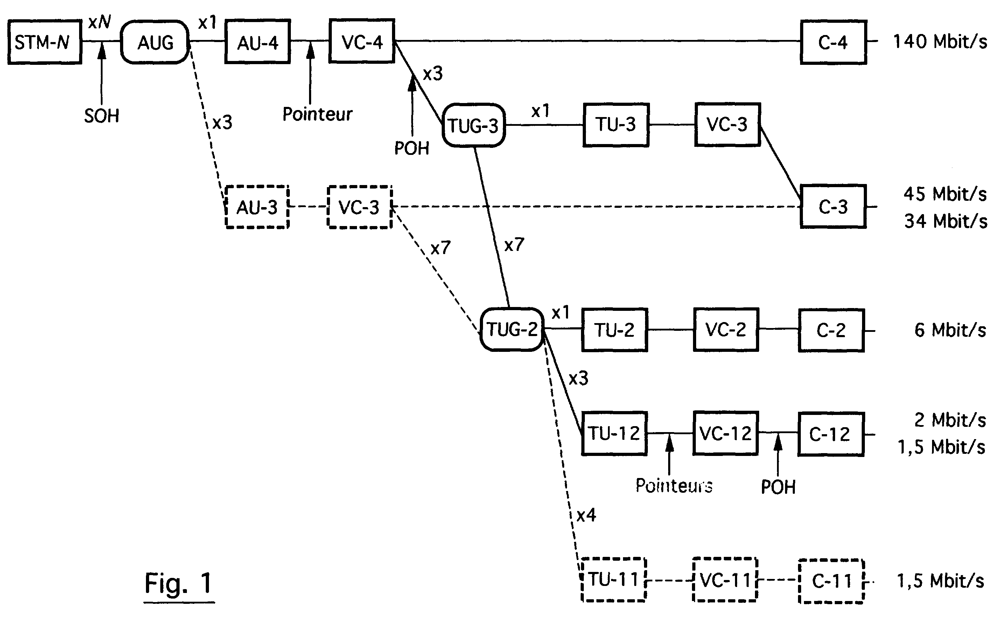

On rappelle maintenant, en relation avec la figure 1, la structure de multiplexage de l'UIT-T pour la nouvelle hiérarchie numérique synchrone SDH. Il est clair que cette structure est parfaitement connue de l'homme du métier, de même que celle de la nouvelle hiérarchie numérique synchrone SONET (cette dernière n'étant pas décrite dans la présente description, du fait qu'elle se déduit directement de la hiérarchie SDH présentée ci-dessous).

Dans la hiérarchie SDH, la trame de base est appelée STM-1, pour "Synchronous Transport Module level 1" en anglais. Elle supporte un débit de 155,520 Mbit/s. Le multiplexage synchrone de N trames de base STM-1 permet d'obtenir une trame STM-N dont le débit est N fois le débit de la trame de base.

On décrit maintenant plus précisément le multiplexage à l'intérieur d'une trame de base STM-1. Par exemple, dans le cas de signaux plésiochrones à 2 Mbit/s (cf partie droite de la figure), les opérations sont les suivantes :
- les signaux plésiochrones sont inclus dans des conteneurs ("Containers" en anglais) C-12;
- des surdébits de conduit (ou POH, pour "Path OverHead" en anglais) sont ajoutés aux conteneurs C-12, pour former des conteneurs virtuels VC-12 ("Virtual Containers" en anglais);
- des pointeurs sont ajoutés aux conteneurs virtuels VC-12, afin de former des unités d'affluents TU-12 ("Tributary Unit" en anglais);
- les unités d'affluents TU-12 sont multiplexées par trois, afin de former un groupe d'unités d'affluents de niveau 2 TUG-2 ("Tributary Unit Group" en anglais);
- les groupes d'unités d'affluents de niveau 2 TUG-2 sont multiplexés par sept, afin de former un groupe d'unités d'affluents de niveau 3 TUG-3;
- les groupes d'unités d'affluents de niveau 3 TUG-3 sont multiplexés par trois, et un surdébit de conduit est ajouté à l'ensemble, afin de former un conteneur virtuel de niveau 4 VC-4;
- un pointeur est ajouté au conteneur virtuel de niveau 4 VC-4, afin de former une unité administrative AU-4 ("Administrative Unit" en anglais);
- des unités administratives AU-4 sont multiplexées, afin de former un groupe d'unités administratives AUG;
- un surdébit de section (ou SOH, pour "Section OverHead" en anglais) est ajouté au groupe d'unités administratives AUG, afin de former une trame de base STM-1.

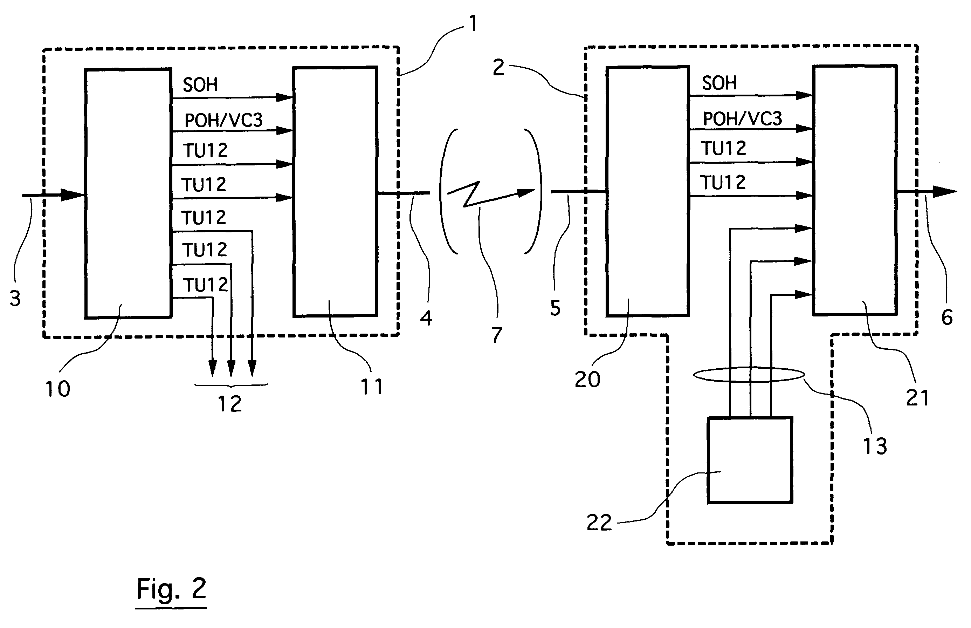

On présente maintenant, en relation avec le schéma synoptique de la figure 2, un mode de réalisation particulier d'un système de transmission par voie hertzienne selon l'invention.

De façon classique, le système comprend un émetteur 1 qui reçoit des données numériques, organisées en trames standardisées source 3, à transmettre à un récepteur 2, via une liaison hertzienne 7.

Il est clair que, dans la pratique, un noeud de réseau peut comprendre un émetteur et un récepteur. Ainsi, les trames reçues par le récepteur d'un noeud peuvent être retransmises par l'émetteur du même noeud vers le récepteur d'un autre noeud. L'homme du métier saura aisément adapter la présente invention à une telle situation.

Chaque trame standardisée correspond à un multiplex de débits selon une hiérarchie numérique synchrone, du type de celle explicitée ci-dessus, en relation avec la figure 1.

De façon spécifique à la présente invention, l'émetteur 1 comprend des moyens 10, 11 de construction de trames non standardisées 4 à partir des trames standardisées source 3, par retrait de certain(s) conteneur(s) de chacune des trames standardisées source 3. L'émetteur 1 transmet au récepteur 2 les trames non standardisées 4 à la place des trames standardisées 3. De façon symétrique, le récepteur 2 comprend des moyens 20, 21, 22 de reconstruction de trames standardisées 6 (si possible identiques aux trames standardisées source 3) à partir des trames non standardisées 5 qu'il reçoit.

Les moyens 10, 11 de construction des trames non standardisées 4 comprennent des moyens 10 de décomposition de chaque trame standardisée source 3 et des moyens 11 de composition de chaque trame non standardisée 4.

Les moyens 10 de décomposition permettent de décomposer chaque trame standardisée source 3 d'une part en unités d'affluents TU-12 et d'autre part en données structurelles communes. On rappelle que les données structurelles communes comprennent notamment des surdébits communs de section SOH et des surdébits communs de conduit POH (du VC4, dans le cas STM-1, et du VC3, dans tous les cas).

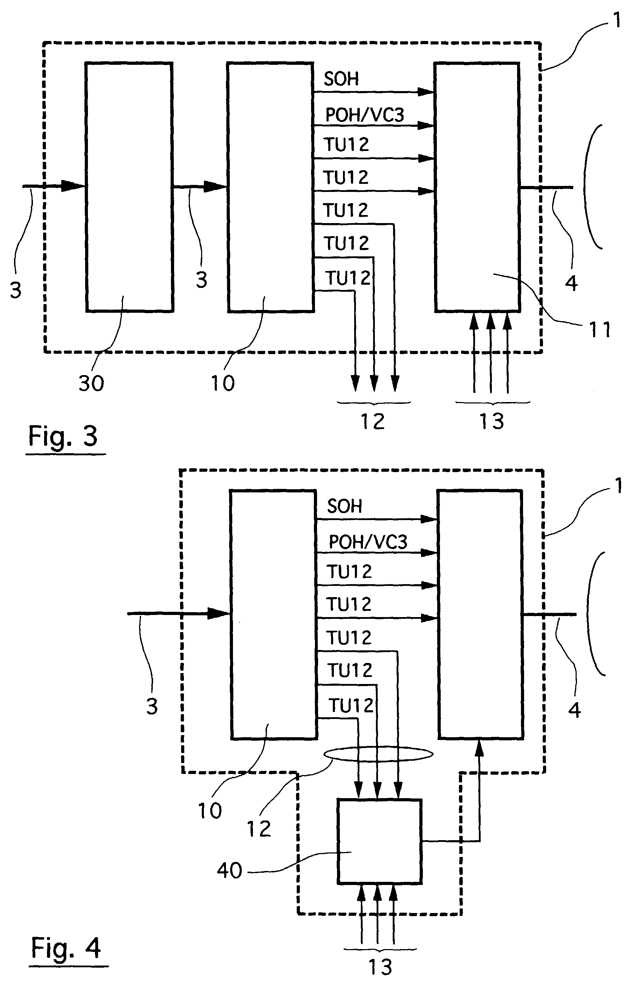

Les moyens 11 de composition de chaque trame non standardisée 4 (ou "trame radio") ôtent certaine(s) unité(s) d'affluents TU-12 (par exemple celles qui sont vides ou non indispensables) de chacune des trames standardisées source 3. En d'autres termes, chaque trame non standardisée 4 comprend toutes les données structurelles communes de la trame standardisée source 3 correspondante, mais seulement une partie de ses unités d'affluents TU-12. Dans l'exemple de la figure 3, trois des cinq unités d'affluents TU-12 sont retirées de chaque trame standardisée source 3, et constituent des composantes non transmises 12. D'une façon générale, afin de maintenir le caractère synchrone de la transmission, il est préférable que le débit des trames standardisées 3 soit un facteur rationnel du débit des trames non standardisées 4.

Il est clair que, selon une variante, le retrait effectué par les moyens 11 de composition peut porter directement sur des conteneurs, au lieu de porter, comme expliqué ci-dessus, sur des unités d'affluents TU-12. On rappelle en effet qu'une unité d'affluent TU-12 n'est rien d'autre que la somme d'un conteneur C-12 et de ses données structurelles propres (surdébits propres de conduit POH et pointeurs).

Les moyens 20, 21, 22 de reconstruction de trames standardisées 6 comprennent des moyens 20 de décomposition de chaque trame non standardisée reçue 5, des moyens 21 de composition de chaque trame standardisée reconstruite 6, et des moyens 22 de génération d'éléments de remplissage.

Les moyens 20 de décomposition permettent de décomposer chaque trame non standardisée reçue 5 d'une part en unités d'affluents TU-12 et d'autre part en données structurelles communes.

Les moyens 21 de composition ajoutent des éléments de remplissage (unités d'affluents TU-12 ou conteneurs C-12 selon le mode de réalisation) à chaque trame non standardisée reçue 5, de façon à obtenir la trame standardisée reconstruite 6 correspondante. Dans l'exemple de la figure 3, trois unités d'affluents TU-12 (soit le nombre d'unités d'affluents retirées de la trame standardisée correspondante 3) sont ajoutées à chaque trame non standardisée reçue 5, et constituent des composantes ajoutées 13.

Les éléments de remplissage (unités d'affluents ou conteneurs) générés par les moyens 22 de génération, contiennent par exemple chacun une indication de leur vacuité, ainsi qu'une ou plusieurs séquences de données d'un type prédéterminé (séquences aléatoires ou de brouillage par exemple).

On présente maintenant une première variante du système de la figure 2. Selon cette première variante, dans l'émetteur 1, les moyens 11 de composition de chaque trame non standardisée 4 assurent, outre le retrait de certaines composantes 12, le calcul de données de contrôle de parité avant émission, pour chaque trame non standardisée à émettre 4. Ces données de contrôle de parité avant émission sont insérées dans la trame non standardisée à émettre 4. Le calcul des données de contrôle de parité avant émission est fonction d'une part de la trame non standardisée à émettre 4 et d'autre part des composantes 13 que le récepteur 2 ajoutera par la suite à la trame non standardisée reçue 5 afin d'obtenir la trame standardisée reconstruite correspondante 6.

Par ailleurs, dans le récepteur 2, les moyens 21 de composition de chaque trame standardisée reconstruite 6 assurent, outre l'ajout de composantes 13 de remplissage, le calcul de données de contrôle de parité après émission, ainsi que la comparaison des données de contrôle de parité avant et après émission, pour chaque trame standardisée reconstruite 6. Cette comparaison permet d'apprécier la qualité de transmission uniquement entre l'émetteur 1 et le récepteur 2, puisque les éventuelles erreurs apparues en amont de l'émetteur sont masquées par le recalcul des données de contrôle de parité par l'émetteur. Le calcul, par le récepteur, des données de contrôle de parité après émission est fonction de la trame standardisée reconstruite 6.

Comme cela apparaît sur le schéma de la figure 3, dans cette première variante, l'émetteur 1 comprend en outre, en amont des moyens 10, 11 de construction de trames non standardisées 4, des moyens 30 de surveillance et de report de la qualité des trames standardisées 3. On rappelle que chaque trame standardisée 3 fournie à l'émetteur provient d'un noeud précédent (non représenté) du réseau et comprend des premières données de contrôle de parité, calculées par le noeud précédent à partir d'une trame standardisée source. Les moyens 30 de surveillance et de report comprennent des moyens de calcul (non représentés), à partir de chaque trame standardisée 3 fournie à l'émetteur, de secondes données de contrôle de parité, ainsi que des moyens (non représentés) de comparaison des premières et secondes données de contrôle de parité, de façon à détecter d'éventuelles erreurs de transmission entre le noeud précédent et l'émetteur 1 (c'est-à-dire apprécier la qualité de transmission entre le noeud précédent et l'émetteur 1).

On présente maintenant une seconde variante du système de la figure 2. Selon cette seconde variante, dans l'émetteur 1, les moyens 11 de composition de chaque trame non standardisée 4 assurent, outre le retrait de certaines composantes 12, la correction des données de contrôle de parité propres à chaque trame standardisée 3. Ainsi, on obtient des données de contrôle de parité avant émission, qui sont insérées dans la trame non standardisée à émettre 4. La correction effectuée est fonction de la différence entre les composantes retirées 12 et les composantes 13 que le récepteur 2 ajoutera par la suite à la trame non standardisée reçue 5 afin d'obtenir la trame standardisée reconstruite correspondante 6. Cette différence est par exemple calculée par un module spécifique 40 et fournie aux moyens 11 de composition.

Par ailleurs, dans le récepteur 2, les moyens 21 de composition de chaque trame standardisée reconstruite 6 assurent, outre l'ajout de composantes 13 de remplissage, le calcul de données de contrôle de parité après émission, ainsi que la comparaison des données de contrôle de parité avant et après émission, pour chaque trame standardisée reconstruite 6. Cette comparaison permet d'apprécier la qualité de transmission en amont du récepteur. En effet, il n'est pas possible d'apprécier la qualité de transmission uniquement entre l'émetteur 1 et le récepteur 2 puisque les éventuelles erreurs apparues en amont de l'émetteur ne sont pas (contrairement à la première variante) masquées par un recalcul des données de contrôle de parité par l'émetteur. Le calcul des données de contrôle de parité après émission est fonction de la trame standardisée reconstruite 6.

## Revendications

1. Système de transmission par voie hertzienne, du type comprenant un émetteur (1) pouvant transmettre à un récepteur (2) des données numériques organisées en trames standardisées, chaque trame standardisée (3) correspondant à un multiplex de débits selon une hiérarchie numérique synchrone et comprenant notamment des conteneurs et des données structurelles communes (POH, SOH, pointeurs),
caractérisé en ce que ledit émetteur (1) comprend des moyens (10, 11) de construction de trames non standardisées (4) à partir desdites trames standardisées (3), par retrait de certain(s) conteneur(s) de chaque trame standardisée, ledit émetteur (1) transmettant audit récepteur (2) lesdites trames non standardisées à la place desdites trames standardisées,
et en ce que ledit récepteur (2) comprend des moyens (20, 21, 22) de reconstruction desdites trames standardisées (6) à partir des trames non standardisées (5) qu'il reçoit.

2. Système selon la revendication 1, caractérisé en ce que chaque conteneur retiré (12) est un conteneur vide ou non indispensable.

3. Système selon l'une quelconque des revendications 1 et 2, caractérisé en ce que lesdits moyens (10, 11) de construction assurent également le retrait de données structurelles (POH, pointeurs) propres à chaque conteneur retiré (12).

4. Système selon l'une quelconque des revendications 1 à 3, caractérisé en ce que lesdits moyens (20, 21, 22) de reconstruction comprennent des moyens (22) d'ajout, dans chaque trame non standardisée reçue, de conteneur(s) de remplissage (13).

5. Système selon la revendication 4, caractérisé en ce que chaque conteneur de remplissage (13) contient une indication de sa vacuité et/ou au moins une séquence de données appartenant au groupe comprenant les séquences aléatoires et les séquences de brouillage.

6. Système selon l'une quelconque des revendications 4 et 5, caractérisé en ce que le nombre de conteneur(s) de remplissage (13) ajouté(s) dans chaque trame non standardisée reçue (5) est égal au nombre de conteneur(s) (12) retiré(s) de la trame standardisée (3) correspondante par lesdits moyens de construction.

7. Système selon l'une quelconque des revendications 1 à 6, caractérisé en ce que lesdites trames standardisées (3) appartiennent au groupe comprenant les trames STM-N, avec N ≥ 0, et les trames STS-M, avec M ≥ 1.

8. Système selon l'une quelconque des revendications 1 à 7, caractérisé en ce que le débit des trames standardisées (3) est un facteur rationnel du débit des trames non standardisées (4).

9. Système selon l'une quelconque des revendications 4 à 8, caractérisé en ce que ledit émetteur (1) comprend des moyens de calcul, pour chaque trame non standardisée à émettre, de données de contrôle de parité avant émission, destinées à être insérées dans ladite trame non standardisée à émettre, ledit calcul étant fonction d'une part de ladite trame non standardisée à émettre et d'autre part du ou des conteneur(s) de remplissage ajouté(s) par le récepteur à la trame non standardisée reçue afin d'obtenir la trame standardisée reconstruite correspondante,
et en ce que ledit récepteur (2) comprend des moyens de calcul, pour chaque trame standardisée reconstruite, de données de contrôle de parité après émission, ledit calcul étant fonction de ladite trame standardisée reconstruite, et des moyens de comparaison desdites données de contrôle de parité avant et après émission, de façon à apprécier la qualité de transmission entre ledit émetteur et ledit récepteur.

10. Système selon la revendication 9, caractérisé en ce que ledit émetteur (1) comprend, en amont desdits moyens (10, 11) de construction de trames non standardisées, des moyens (30) de surveillance et de report de la qualité des trames standardisées.

11. Système selon l'une quelconque des revendications 4 à 8, chaque trame standardisée comprenant des données de contrôle de parité qui lui sont propres,
caractérisé en ce que ledit émetteur (1) comprend des moyens de correction desdites données de contrôle de parité propres à chaque trame standardisée, de façon à obtenir des données de contrôle de parité avant émission destinées à être insérées dans la trame non standardisée à émettre correspondante, ladite correction étant fonction de la différence entre le ou les conteneur(s) retiré(s) de chaque trame standardisée et le ou les conteneur(s) de remplissage ajouté(s) par le récepteur à la trame non standardisée reçue afin d'obtenir la trame standardisée reconstruite correspondante,
et en ce que ledit récepteur (2) comprend des moyens de calcul, pour chaque trame standardisée reconstruite, de données de contrôle de parité après émission et des moyens de comparaison desdites données de contrôle de parité avant et après émission, de façon à apprécier la qualité de transmission en amont dudit récepteur.

12. Emetteur (1) compris dans un système de transmission hertzienne selon l'une quelconque des revendications 1 à 11, caractérisé en ce que ledit émetteur (1) comprend des moyens (10, 11) de construction de trames non standardisées (4) à partir desdites trames standardisées (3), par retrait de certain(s) conteneur(s) (12) de chaque trame standardisée, ledit émetteur transmettant audit récepteur (2) lesdites trames non standardisées à la place desdites trames standardisées.

13. Récepteur (2) compris dans un système de transmission hertzienne selon l'une quelconque des revendications 1 à 11, caractérisé en ce que ledit récepteur comprend des moyens (20, 21, 22) de reconstruction desdites trames standardisées (6) à partir des trames non standardisées (5) qu'il reçoit.
